# FASCICULE DE BREVET EUROPEEN

(11) **EP 2 125 489 B1**
(45) Date de publication et mention de la délivrance du brevet: **07.03.2018**
(21) Numéro de dépôt: 08761995.3
(22) Date de dépôt: 29.01.2008
(51) Int. Cl.: B62D 6/00, B62D 5/04, B62D 7/15

(54) **DISPOSITIF ET PROCEDE DE LIMITATION DE LA VITESSE DE BRAQUAGE D'UN VEHICULE**
VORRICHTUNG UND VERFAHREN ZUR BEGRENZUNG DER LENKGESCHWINDIGKEIT EINES FAHRZEUGS
DEVICE AND METHOD FOR LIMITING THE STEERING SPEED OF A VEHICLE

(30) Priorité: 28.02.2007 FR 0753559
(43) Date de publication de la demande: 02.12.2009
(73) Titulaire: Renault SAS, 92100 Boulogne Billancourt (FR)
(72) Inventeur: CHASSAGNOL, Cédric, F-92300 Levallois-Perret (FR); GUEGAN, Stéphane, F-78000 Versailles (FR)
(86) Numéro de dépôt international: PCT/FR2008/050134
(87) Numéro de publication internationale: WO 2008/110712

(56) Documents cités:
- EP-A2- 1 188 640
- WO-A-2007/071852
- DE-A1- 10 302 559
- DE-A1- 19 905 433

## Description

Le domaine de l'invention est celui des systèmes de braquage de véhicule automobile.

L'invention concerne plus précisément un système de braquage commandé par une consigne d'angle susceptible de présenter des sauts, et vise à réduire la dangerosité d'un saut dans la consigne d'angle.

On considère ci-après à titre illustratif un système de braquage pour les roues arrières directrices d'un véhicule à quatre roues directrices.

On comprendra toutefois que l'invention n'est pas limitée à un tel type de système de braquage, mais a vocation à s'appliquer à tout système de braquage pour lequel un saut dans la consigne est susceptible de s'avérer dangereux en fonction de son amplitude et de sa vitesse, notamment du fait qu'un tel saut n'est pas prévisible par le conducteur. La demande internationale WO 2007/071852 (Renault SAS) qui est un document qui ne peut être pris en considération que pour la nouveauté selon l'article 54(3) CBE, décrit un procédé de commande de l'angle de braquage de roue arrière d'un véhicule automobile dans lequel on calcule ledit angle de braquage de roue arrière à partir d'une loi de commande fonction de variables d'entrée telles que l'angle de rotation du volant et de la vitesse du véhicule. Dans ce procédé, on détecte l'apparition d'une valeur erronée d'au moins une des variables d'entrée, et on remplace la valeur erronée par une valeur antérieure sure. En outre, on mesure le gradient de la vitesse du véhicule, on compare le gradient à une valeur limite prédéterminée du gradient, et on règle la valeur d'un drapeau signalant un éventuel dépassement de la valeur limite.

La demande de brevet EP 1 188 640 (BMW) décrit un procédé de contrôle d'un système de braquage de véhicule automobile à l'aide d'un actionneur. Cet actionneur commande le système de braquage à partir d'une consigne d'angle de braquage. Dans ce procédé, on impose une vitesse de braquage limitée destinée à l'actionneur de manière à améliorer la robustesse du contrôle automatique du système de braquage.

La demande de brevet DE 103 02 559 (DaimlerChrysler) décrit une méthode pour synchroniser la position du volant de braquage et l'angle de braquage qui a été transmis aux roues à l'aide d'un système de contrôle. Dans cette méthode, on compare une position instantanée et un angle instantané, et en cas d'écart de position on réduit cet écart par un ajustement relatif en fonction d'un critère basé sur la vitesse longitudinale du véhicule. En outre, la vitesse de synchronisation, c'est-à-dire le gradient d'ajustement relatif, est limitée à une valeur maximum de manière à éviter la décroissance rapide des ajustements.

La demande de brevet DE 199 05 433 (Bosch) décrit un procédé pour réduire la réaction du braquage des roues d'un véhicule automobile en imposant un angle de braquage additionnel sur l'angle de braquage souhaité par le conducteur. Dans ce procédé, on détecte une augmentation soudaine de l'angle de braquage additionnel, on détermine si cette augmentation est critique pour le mouvement du véhicule, et si oui, on limite la valeur du couple de braquage. En outre, la limitation du couple de braquage est faite en fonction de plusieurs situations critiques, telles qu'un dérapage ou un freinage. Cette limitation est progressive en fonction de la criticité des situations.

Un système de braquage pour les roues arrières directrices a notamment pour contrainte sécuritaire de ne pas se déplacer de manière intempestive, voire plus largement de ne pas se déplacer sans que cela ne soit en adéquation avec la volonté du conducteur.

Or il existe différents cas de figure dans lesquels cette contrainte sécuritaire peut ne pas être respectée.
✔ Une première situation concerne l'indisponibilité d'informations intersystèmes.

On rappelle que les informations (angle volant et vitesse véhicule) utilisées par le système de braquage des roues arrières directrices (système 4RD) pour déterminer sa consigne de position sont envoyées par le calculateur véhicule et dispensées par l'intermédiaire d'un bus de communication multiplexé.

En cas d'absence ou d'invalidité de l'une de ces informations, le système 4RD active alors un mode dit 'mode refuge sûr'.

Toutefois, ce mode n'est activé qu'après la réalisation d'une étape de filtrage des pannes. Un temps maximum durant lequel on peut tolérer la non disponibilité d'une information est ainsi défini.

Si l'information est de nouveau disponible avant l'expiration du temps de tolérance maximum défini, le système 4RD re-fonctionnera de manière nominale. Dans le cas contraire, le système 4RD activera le mode refuge sûr.

Au cours de la période de filtrage, le système 4RD conserve en mémoire la dernière information disponible reçue.

On comprend donc que si le temps de filtrage choisi est trop long, le saut d'angle arrière généré par le retour de l'information peut s'avérer dangereux pour le conducteur.

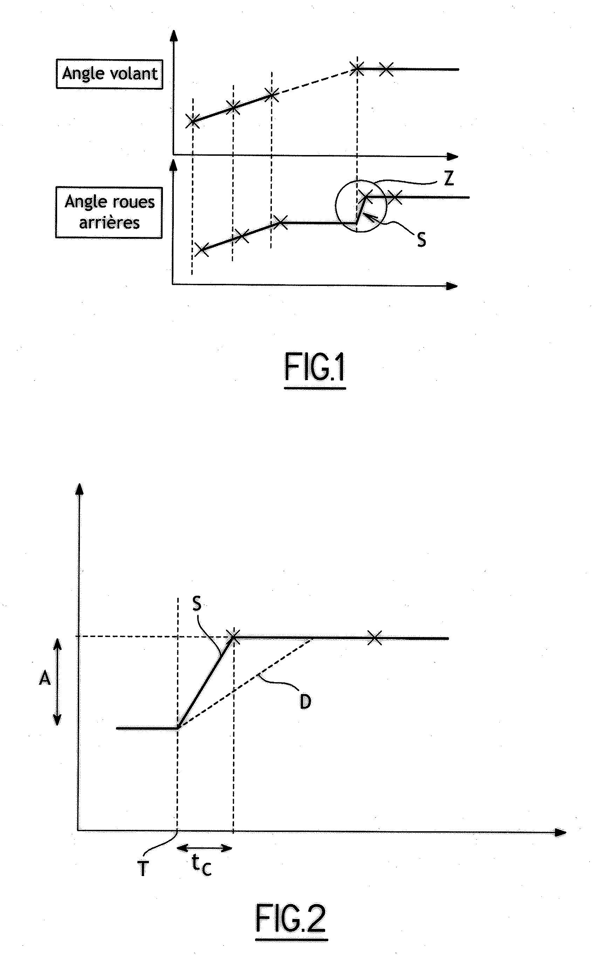

On a représenté sur la figure 1 l'occurrence d'un tel saut dans la consigne d'angle appliquée au système 4RD suite à la non-disponibilité d'une information et à la réception de cette information avant l'expiration du temps de tolérance.

Sur cette figure 1, le schéma supérieur représente l'angle volant. Le trait pointillé illustre l'indisponibilité de l'information angle volant pendant une durée inférieure au temps de tolérance.

Le schéma inférieur représente l'angle roues arrières calculé à partir notamment de l'angle volant, et fourni en tant que consigne au système 4RD.

Comme cela est illustré sur la figure 1, lors de la période d'indisponibilité de l'information angle volant, le système 4RD utilise la dernière information valide reçue, et l'angle roues arrières de consigne reste à ce niveau constant.

Dans le cas ici représenté, l'information angle volant est de nouveau disponible avant l'expiration du temps de tolérance et par conséquent avant que le système 4RD n'active un mode refuge. Ainsi lors du retour de l'information angle volant, le système 4RD fonctionne de manière nominale, et il s'en suit dans le cas représenté un saut S dans la consigne d'angle. Ce saut S est potentiellement dangereux en fonction de son amplitude et de sa vitesse.

La figure 2 est un zoom du schéma inférieur de la figure 1 autour du moment Z où l'information angle volant redevient disponible. Le saut S, ici représenté en trait plein sur la figure 2, consécutif au retour d'information à l'instant T présente une amplitude A et est associée à une vitesse de braquage (en degré par seconde : °/s) caractérisée par la pente du saut S de sorte que la valeur nominale est atteinte après une durée t_{C} suite au retour de l'information angle volant.
✔ Une autre situation dans laquelle la contrainte sécuritaire peut ne pas être respectée concerne l'activation d'un mode refuge dit « retour en position neutre ».

L'un des modes refuges applicables par le système 4RD en cas de panne est effectivement le retour en position neutre dans laquelle l'angle de consigne est de 0°. Dans un tel cas de figure, la consigne passe brusquement de sa valeur courante à 0°.

Un tel saut de consigne peut lui aussi s'avérer dangereux dans la mesure où il n'est pas prévisible pour le conducteur.
✔ Encore une autre situation concerne le réveil du système 4RD alors que le véhicule est roulant.

Or il est possible que le calculateur du système 4RD effectue son réveil alors que la vitesse véhicule et l'angle volant sont non nuls. Dans un tel cas de figure, dès la fin de l'initialisation du système 4RD, un braquage va s'effectuer à la vitesse maximale.

Ce saut de consigne, non prévisible pour le conducteur, peut lui aussi s'avérer dangereux.

On comprend de ce qui précède que différentes situations peuvent entraîner un non-respect des contraintes sécuritaires du fait de l'occurrence d'un saut d'angle de consigne potentiellement important. Et comme on l'a vu précédemment ce risque sécuritaire provient de l'association de l'amplitude de braquage à la vitesse de braquage.

Afin de limiter ce risque sécuritaire, différentes solutions ont été envisagées.
✔ Il a tout d'abord été envisagé de réduire le temps de filtrage des pannes à une valeur assurant que l'amplitude du saut d'angle est inférieure à un seuil considéré comme sécuritaire (ce seuil sécuritaire étant à calculer en fonction de la dynamique maximale de l'angle volant ou de la vitesse véhicule).

Cette solution est toutefois problématique dans la mesure où elle ne prend pas en compte les contraintes de l'émetteur des informations, à savoir le calculateur véhicule.
✔ Il a également été envisagé d'utiliser un mode refuge « blocage en position » plutôt qu'un mode refuge « retour en position neutre ».

Mais cette solution est également problématique car ce mode diminue la disponibilité du système (notamment du fait de l'allumage d'un voyant STOP lorsque l'angle arrière de blocage est trop important).
✔ Il est également possible d'interdire tout réveil du système lorsque la vitesse véhicule est non nulle. Mais cette solution est également problématique car la situation de réveil à vitesse non nulle peut souvent être rencontrée pour certains conducteurs.

Les différentes solutions envisagées ne s'avèrent donc pas satisfaisantes, et un besoin demeure pour une technique permettant de réduire le risque sécuritaire lié à un saut dans la consigne d'angle d'un système de braquage pour véhicule.

L'invention a pour objectif de répondre à ce besoin, et propose à cet effet selon un premier aspect un procédé de contrôle d'un système de braquage de véhicule automobile commandé par une consigne d'angle, dans lequel on impose une vitesse de braquage limitée pour réduire la dangerosité d'un saut dans la consigne d'angle.

Certains aspects préférés, mais non limitatifs, de ce procédé sont les suivants :
- on impose une vitesse de braquage limitée en cas d'indisponibilité de l'une des informations utilisées pour déterminer la consigne d'angle du système de braquage ;
- on impose une vitesse de braquage limitée en cas d'activation d'un mode refuge selon lequel la consigne d'angle passe de sa valeur courante à une valeur neutre ;
- on impose une vitesse de braquage limitée en cas de réveil d'un calculateur utilisé pour déterminer la consigne d'angle du système de braquage ;
- on impose une vitesse de braquage limitée dans l'un et/ou l'autre des situations présentées ci-dessus ;
- une valeur particulière de vitesse de braquage limitée est associée à chacune des situations présentées ci-dessus, ladite valeur étant fournie par un commutateur multiport en cas d'activation de la fonction de limitation de la vitesse de braquage ;
- on impose une vitesse de braquage limitée tant que la différence entre la consigne d'angle nominale en absence de limitation de la vitesse de braquage et la consigne d'angle en cas de limitation de la vitesse de braquage est supérieure à un seuil prédéterminé.

Selon un second aspect, l'invention concerne un système de braquage pour véhicule automobile, commandé par une consigne d'angle de braquage, et configuré pour mettre en oeuvre le procédé selon le premier aspect de l'invention, et notamment caractérisé en ce qu'il comporte des moyens pour imposer une vitesse de braquage limitée de manière à réduire la dangerosité d'un saut dans la consigne d'angle de braquage.

L'invention s'étend également à un véhicule automobile comportant un système selon le second aspect de l'invention.

D'autres aspects, buts et avantages de la présente invention apparaîtront mieux à la lecture de la description détaillée suivante de formes de réalisation préférées de celle-ci, donnée à titre d'exemple non limitatif, et faite en référence aux dessins annexés sur lesquels :
- la figure 1, déjà commentée, représente l'occurrence d'un saut dans la consigne d'angle appliquée à un système de braquage suite à la non-disponibilité d'une information et à la réception de cette information avant l'activation d'un mode refuge.
- la figure 2 représente un saut d'angle de consigne lors d'un retour d'information selon l'état de la technique (trait plein) et lors d'un retour d'information mis en oeuvre selon l'invention (trait pointillé) ;
- la figure 3 représente l'activation de la fonction de limitation de la vitesse de braquage selon différentes situations ;
- la figure 4 représente le choix de la valeur de vitesse de braquage limitée selon différentes situations ;
- la figure 5 représente les différents blocs participant à l'activation de la fonction de limitation de la vitesse de braquage.

Selon un premier aspect, l'invention concerne un procédé de contrôle d'un système de braquage de véhicule automobile commandé par une consigne d'angle, dans lequel on impose une vitesse de braquage limitée pour réduire la dangerosité d'un saut dans la consigne d'angle.

On a représenté sur la figure 2 un saut d'angle de consigne lors d'un retour d'information mis en oeuvre selon l'invention pour diminuer la dangerosité du saut d'angle consécutif à ce retour d'information.

Sur cette figure 2, la référence S en trait plein représente le saut en l'absence de la mise en oeuvre de l'invention. Comme déjà indiqué, en fonction de son amplitude A et de sa vitesse (la pente ou gradient du saut S), ce saut que l'on peut qualifier de brusque est potentiellement dangereux pour le conducteur.

Sur cette même figure 2, la référence D en trait pointillé représente le saut consécutif au retour d'information lors de la mise en oeuvre de l'invention. On impose alors une vitesse de braquage limitée, par exemple une vitesse d'environ 1 °/s. Comme cela est apparent, le saut D présente alors une pente inférieure à celle du saut C, et l'amplitude A n'est atteinte qu'après une durée t_{D} supérieure à la durée t_{C} du saut S.

Il en découle un saut que l'on peut qualifier de doux, à la dangerosité réduite.

Outre l'aspect sécuritaire, la solution selon l'invention consistant à limiter la vitesse de braquage présente notamment les avantages suivants.

L'invention autorise un choix libre des temps de filtrage des différentes informations utilisées par le calculateur du système de braquage. Ce choix peut en particulier être réalisé de manière cohérente avec les spécifications du calculateur véhicule produisant ces informations, et avec les situations véhicules pouvant être générées par le conducteur.

L'invention est simple de mise en oeuvre (elle peut par exemple être implémentée de manière logicielle) et présente ainsi un coût limité.

L'invention permet de préférer le mode refuge « Retour en position neutre » au mode refuge « Blocage en position ».

Revenant à la description d'un mode de réalisation possible de l'invention, on retiendra que l'imposition d'une vitesse de braquage limitée peut notamment être réalisée sur occurrence d'une situation particulière.

En particulier, on peut choisir d'imposer une vitesse de braquage limitée suite à l'occurrence de l'une et/ou l'autre des situations présentées en introduction, à savoir :
- l'indisponibilité de l'une des informations (typiquement angle volant et vitesse véhicule) utilisées pour déterminer la consigne d'angle du système de braquage ;
- l'activation d'un mode refuge dit « retour en position neutre » selon lequel la consigne d'angle passe de sa valeur courante à une valeur neutre (typiquement angle de consigne de 0°) ;
- lors du réveil du calculateur utilisé pour déterminer la consigne d'angle du système de braquage.

On comprendra toutefois que l'invention n'est pas limitée à ces situations particulières, mais qu'il est bien entendu possible d'activer la limitation de la vitesse de braquage sur occurrence d'autres situations.

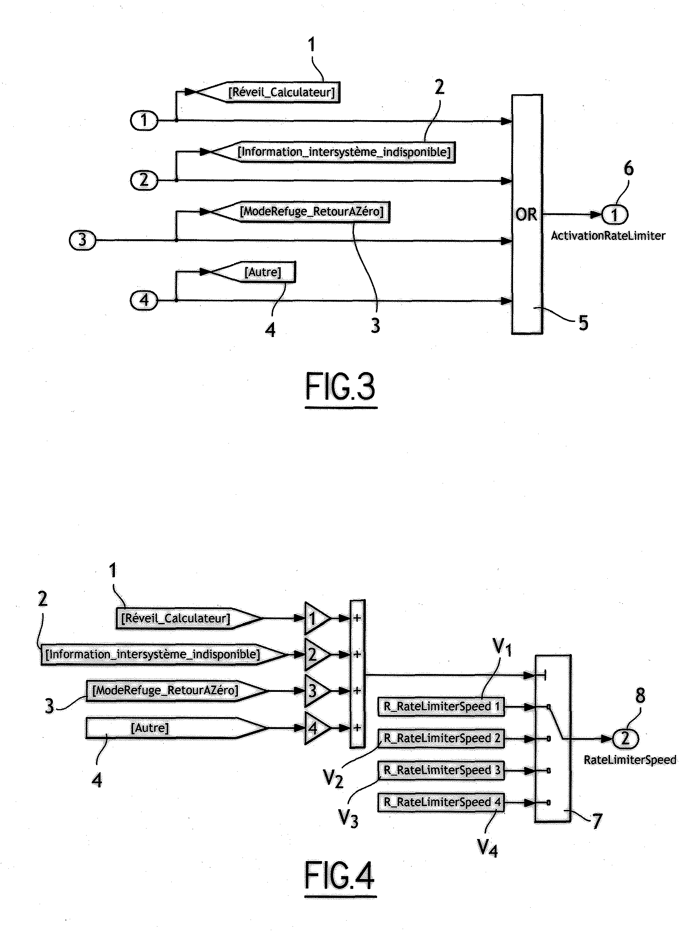

On a représenté sur la figure 3 différentes situations pouvant entraîner la fonction de limitation de la vitesse de braquage.

Sur cette figure 3, un fanion 1 « Reveil_Calculateur » monte à 1 durant la phase de réveil du calculateur du système de braquage, un fanion 2 « Information_Intersysteme_Indisponible » monte à 1 lorsque l'une des informations émises par le calculateur véhicule est absente ou invalide, un fanion 3 « ModeRefuge_RetourAZero » monte à 1 lorsque le mode refuge retour en position neutre est activé, et un fanion 4 « Autre » est réservé pour monter à 1 sur occurrence d'une autre situation, et permet si besoin est de d'ajouter une nouvelle condition d'activation de la limitation de la vitesse de braquage.

Chacun de ces fanions 1-4 est relié à une porte OU 5 de manière à contrôler l'état d'un fanion 6 « ActivationRateLimiter » qui va lui permettre, comme cela va être décrit par la suite, d'activer la fonction de limitation de la vitesse de braquage.

Ainsi le fanion 5 monte à 1 dès lors que l'un des fanions 1-4 relatif à une condition d'activation monte à 1.

On comprendra que l'invention n'est pas limitée à l'utilisation d'une seule vitesse de braquage limitée, et que comme cela est représenté sur la figure 4, il est possible d'associer une valeur particulière de vitesse de braquage limitée à chacune des conditions d'activation.

A cet effet, un commutateur multiport 7 est prévu pour fournir en sortie la valeur de la vitesse de braquage à utiliser (représentée par le fanion 8 « RateLimiterSpeed ») en cas d'activation de la fonction de limitation de la vitesse de braquage.

Ainsi la montée à 1 du fanion 1 « Reveil_Calculateur » va permettre de sélectionner une première vitesse de braquage V₁ « R_RateLimiterSpeed1 », la montée à 1 du fanion 2 « Information_Intersysteme_Indisponible » va permettre de sélectionner une seconde vitesse de braquage V₂ « R_RateLimiterSpeed2 », la montée à 1 du fanion 3 « ModeRefuge_RetourAZero » va permettre de sélectionner une troisième vitesse de braquage V₃ « R_RateLimiterSpeed3 », et la montée à 1 du fanion 4 « Autre» va permettre de sélectionner une quatrième vitesse de braquage V₄« R_RateLimiterSpeed4».

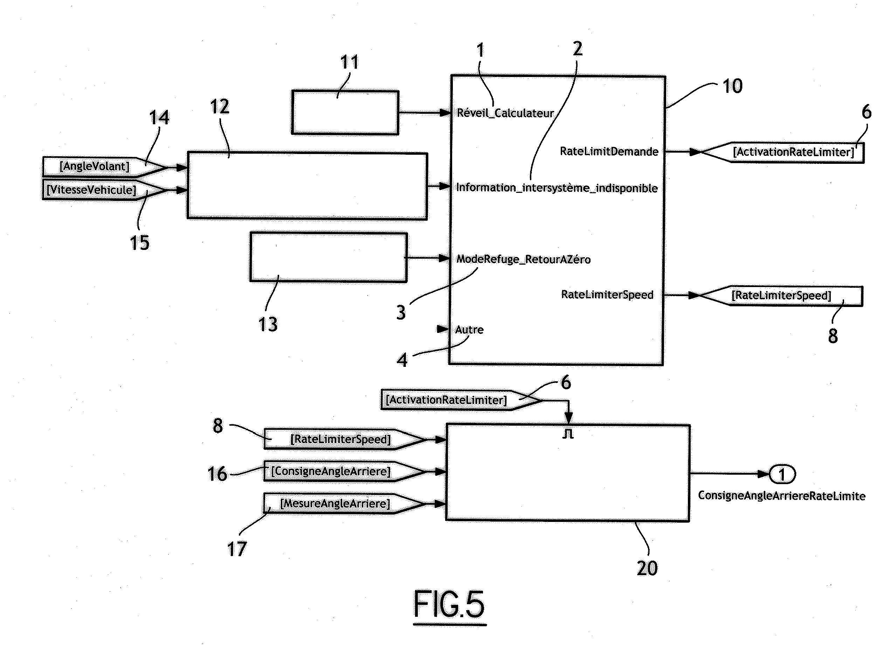

La figure 5 représente les différents blocs participant à l'activation de la fonction de limitation de la vitesse de braquage.

En particulier le système de braquage selon l'invention peut comporter un bloc 10 configuré pour signaler que la fonction de limitation de la vitesse de braquage doit être activée et pour signaler la vitesse de limitation à appliquer. Le bloc 10 présente ainsi pour sorties le fanion 6 « ActivationRateLimiter » et le fanion 8 « RateLimiterSpeed ».

Ce bloc 10 reçoit en entrée l'état des différents fanions 1-4 présentés précédemment, relatifs aux conditions d'activation de la limitation de la vitesse de braquage.

Le bloc 10 est constitué des éléments présentés sur la figure 3, et peut également présenter les éléments présentés sur la figure 4 lorsque différentes limitations de vitesse sont prévues.

On a également représenté sur la figure 5 :
- un bloc 11 signalant que le calculateur se trouve ou non en position de réveil, et commandant l'état du fanion 1 « Reveil_Calculateur »,
- un bloc 12 signalant que l'une des informations est absente ou invalide, et commandant l'état du fanion 2 « Information_Intersysteme_Indisponible ». On relèvera qu'en autres informations, le bloc 12 utilise les informations d'angle volant (fanion 14) et de vitesse véhicule (fanion 15).
- Un bloc 13 signalant que le mode refuge « Retour à Zéro » est activé, et commandant l'état du fanion 3 « ModeRefuge_RetourAZero ».

Le système de braquage selon l'invention comporte également un bloc 20 de calcul de la consigne d'angle (par exemple de la consigne d'angle arrière « ConsigneAngleArriereRateLimite » lorsque le système de braquage est destiné à réaliser le braquage de roues arrières directrices) à appliquer lorsque fanion 6 « ActivationRateLimiter » est activé.

Le bloc 20 utilise les informations suivantes :
- la vitesse de limitation à appliquer (fanion 8 « RateLimiterSpeed ») ;
- la consigne d'angle (fanion 16 « ConsigneAngleArriere ») calculée classiquement par le calculateur du système de braquage en fonction de l'angle volant et de la vitesse véhicule ;
- la mesure d'angle (fanion 17 « MesureAngleArriere ») qui est classiquement délivrée par les capteurs du système de braquage.

Suite à l'activation de la limitation de la vitesse de braquage, et selon un mode de réalisation préférentiel, la vitesse de braquage limitée est imposée tant que la différence entre la consigne d'angle nominale en absence de limitation de la vitesse de braquage (« ConsigneAngleArriere ») et la consigne d'angle en cas de limitation de la vitesse de braquage (« ConsigneAngleArriereRateLimite ») est supérieure à un seuil prédéterminé.

Ce seuil peut notamment être choisi entre une valeur maximale correspondant à la valeur en dessous de laquelle un mouvement rapide de braquage est considéré comme non dangereux, et une valeur minimale correspondant à la valeur à partir de laquelle on peut désactiver la fonction de limitation de la vitesse de braquage. Ce seuil est de préférence choisi entre 0° et 0,3° (seuil intempestif qu'il n'est pas possible de dépasser); il est par exemple de 0,12° dans les applications ici envisagées.

## Revendications

1. Procédé de contrôle d'un système de braquage de véhicule automobile commandé par une consigne d'angle, dans lequel on impose une vitesse de braquage limitée sur occurrence d'une situation particulière pour réduire la dangerosité d'un saut dans la consigne d'angle, **caractérisé en ce qu'**on impose une vitesse de braquage limitée tant que la différence entre la consigne d'angle nominale en absence de limitation de la vitesse de braquage et la consigne d'angle en cas de limitation de la vitesse de braquage est supérieure à un seuil prédéterminé.

2. Procédé selon la revendication 1, dans lequel on impose une vitesse de braquage limitée en cas d'indisponibilité de l'une des informations utilisées pour déterminer la consigne d'angle du système de braquage.

3. Procédé selon la revendication 1, dans lequel on impose une vitesse de braquage limitée en cas d'activation d'un mode refuge selon lequel la consigne d'angle passe de sa valeur courante à une valeur neutre.

4. Procédé selon la revendication 1, dans lequel on impose une vitesse de braquage limitée en cas de réveil d'un calculateur utilisé pour déterminer la consigne d'angle du système de braquage,

5. Procédé selon la revendication 1, dans lequel on impose une vitesse de braquage limitée en cas d'indisponibilité de l'une des informations utilisées pour déterminer la consigne d'angle du système de braquage, en cas d'activation d'un mode refuge selon lequel la consigne d'angle passe de sa valeur courante à une valeur neutre et/ou en cas de réveil d'un calculateur utilisé pour déterminer la consigne d'angle du système de braquage.

6. Procédé selon la revendication 5, dans lequel une valeur particulière de vitesse de braquage limitée est associée à chacun des cas d'imposition d'une vitesse de braquage limitée, ladite valeur étant fournie par un commutateur multiport (7) en cas d'activation de la fonction de limitation de la vitesse de braquage.

7. Système de braquage pour véhicule automobile, commandé par une consigne d'angle de braquage, le système comportant des moyens (5,6) pour détecter l'occurrence d'une situation particulière et des moyens (20) pour imposer une vitesse de braquage limitée lors de la détection d'une telle occurrence de manière à réduire la dangerosité d'un saut dans la consigne d'angle de braquage, **caractérisé en ce que** les moyens (20) pour imposer une vitesse de braquage limitée lors de la détection d'une telle occurrence imposent une vitesse de braquage limitée tant que la différence entre la consigne d'angle nominale en absence de limitation de la vitesse de braquage et la consigne d'angle en cas de limitation de la vitesse de braquage est supérieure à un seuil prédéterminé.

8. Véhicule automobile comportant un système selon la revendication 7.

## Patentansprüche

1. Verfahren zur Kontrolle eines Lenksystems eines Kraftfahrzeugs, das von einem Winkelsollwert gesteuert wird, bei dem eine begrenzte Lenkgeschwindigkeit bei Eintreten einer besonderen Situation vorgegeben wird, um die Gefährlichkeit eines Sprungs im Winkelsollwert zu reduzieren, **dadurch gekennzeichnet, dass** eine begrenzte Lenkgeschwindigkeit vorgegeben wird, solange die Differenz zwischen dem Nominalwinkelsollwert bei Nichtvorhandensein einer Begrenzung der Lenkgeschwindigkeit und dem Winkelsollwert im Falle einer Begrenzung der Lenkgeschwindigkeit größer als eine vorbestimmte Schwelle ist.

2. Verfahren nach Anspruch 1, bei dem eine begrenzte Lenkgeschwindigkeit im Falle einer Nichtverfügbarkeit einer der Informationen, die verwendet werden, um den Winkelsollwert des Lenksystems zu bestimmen, vorgegeben wird.

3. Verfahren nach Anspruch 1, bei dem eine begrenzte Lenkgeschwindigkeit im Falle einer Aktivierung eines Schutzmodus vorgegeben wird, nach dem der Winkelsollwert von seinem laufenden Wert zu einem neutralen Wert übergeht.

4. Verfahren nach Anspruch 1, bei dem eine begrenzte Lenkgeschwindigkeit im Falle einer Ingangsetzung eines Rechners vorgegeben wird, der verwendet wird, um den Winkelsollwert des Lenksystems zu bestimmen.

5. Verfahren nach Anspruch 1, bei dem eine begrenzte Lenkgeschwindigkeit im Falle einer Nichtverfügbarkeit einer der Informationen, die verwendet werden, um den Winkelsollwert des Lenksystems zu bestimmen, im Falle einer Aktivierung eines Schutzmoduls, nach dem der Winkelsollwert von seinem laufenden Wert zu einem neutralen Wert übergeht, und/oder im Falle einer Ingangsetzung eines Rechners, der verwendet wird, um den Winkelsollwert des Lenksystems zu bestimmen, vorgegeben wird.

6. Verfahren nach Anspruch 5, bei dem ein besonderer Wert einer begrenzten Lenkgeschwindigkeit jedem der Fälle des Vorgebens einer begrenzten Lenkgeschwindigkeit zugeordnet wird, wobei der Wert von einem Mehrport-Schalter (7) im Falle einer Aktivierung der Funktion der Begrenzung der Lenkgeschwindigkeit geliefert wird.

7. Lenksystem für ein Kraftfahrzeug, das von einem Lenkwinkelsollwert gesteuert wird, wobei das System Mittel (5, 6) umfasst, um das Eintreten einer besonderen Situation zu erfassen, und Mittel (20), um eine begrenzte Lenkgeschwindigkeit bei der Erfassung eines solchen Eintretens vorzugeben, um die Gefährlichkeit eines Sprungs im Lenkwinkelsollwert zu reduzieren, **dadurch gekennzeichnet, dass** die Mittel (20) zum Vorgeben einer begrenzten Lenkgeschwindigkeit bei der Erfassung eines solchen Eintretens eine begrenzte Lenkgeschwindigkeit vorgeben, solange die Differenz zwischen dem Nominalwinkelsollwert bei Nichtvorhandensein einer Begrenzung der Lenkgeschwindigkeit und dem Winkelsollwert im Falle einer Begrenzung der Lenkgeschwindigkeit größer als eine vorbestimmte Schwelle ist.

8. Kraftfahrzeug, umfassend ein System nach Anspruch 7.

## Claims

1. Method for managing a motor vehicle steering system controlled by an angle setpoint value, wherein a limited steering speed is imposed upon the occurrence of a particular situation in order to reduce the dangerousness of a jump in the angle setpoint value, **characterized in that** a limited steering speed is imposed for as long as the difference between the nominal angle setpoint value in the absence of a steering speed limit and the angle setpoint value in the event of a steering speed limit is greater than a predetermined threshold.

2. Method according to Claim 1, wherein a limited steering speed is imposed in the event of unavailability of one of the items of information used to determine the angle setpoint value of the steering system.

3. Method according to Claim 1, wherein a limited steering speed is imposed in the event of activation of a refuge mode in which the angle setpoint value changes from its current value to a neutral value.

4. Method according to Claim 1, wherein a limited steering speed is imposed in the event of waking of a computer used to determine the angle setpoint value of the steering system.

5. Method according to Claim 1, wherein a limited steering speed is imposed in the event of unavailability of one of the items of information used to determine the angle setpoint value of the steering system, in the event of activation of a refuge mode in which the angle setpoint value changes from its current value to a neutral value and/or in the event of waking of a computer used to determine the angle setpoint value of the steering system.

6. Method according to Claim 5, wherein a particular limited steering speed value is associated with each of the events for imposing a limited steering speed, said value being supplied by a multi-port switch (7) in the event of activation of the steering speed-limiting function.

7. Steering system for a motor vehicle, controlled by a steering angle setpoint value, the system including means (5,6) for detecting the occurrence of a particular situation and means (20) for imposing a limited steering speed upon detection of such an occurrence so as to reduce the dangerousness of a jump in the steering angle setpoint value, **characterized in that** the means (20) for imposing a limited steering speed upon detection of such an occurrence impose a limited steering speed for as long as the difference between the nominal angle setpoint value in the absence of a steering speed limit and the angle setpoint value in the event of a steering speed limit is greater than a predetermined threshold.

8. Motor vehicle including a system according to Claim 7.
